# EUROPEAN PATENT APPLICATION

(11) **EP 0 882 394 A2**
(43) Date of publication of application: **09.12.1998**
(21) Application number: 98110161.1
(22) Date of filing: 04.06.1998
(51) Int. Cl.: A01K 47/00

(54) **Contamination-immune hive**

(30) Priority: 06.06.1997 IT FI970084 U
(71) Applicant: Corsini, Carlo, 19031 Ameglia (La Spezia) (IT)
(72) Inventor: Corsini, Carlo, 19031 Ameglia, Prov. of La Spezia (IT); Zahlmann, Werner, 50127 Florence (IT)
(74) Representative: Gervasi, Gemma, Dr.

(57) **Abstract**

Contamination-immune hive, consisting of a fixed structure resistant to thermal and/or chemical disinfecting treatment and of removable and disposable walls.

## Description

### Field of the invention

The present invention refers to the beekeeping field and in particular it refers to a man made hive.

As it is well known, hives are box-shaped structures consisting of a plurality of sectors comprising a central body. The central body is a portion of the hive raised from the ground where the colony of bees, consisting of a swarm following a queen bee, establishes its nest. A structure, called honey box, is placed on the central body. Inside this box the bees deposit the excess honey which is then collected by the beekeeper. The central body and the honey box are separated by a grid having a mesh sizing which prevents the queen bee, and the drones possibly present in the hive, from entering into the honey box.

The already known hives are also provided with a removable bottom, called anti-varoa bottom, by which the possible presence of the varoa parasite in the nest can be revealed (varoa is a very dangerous parasite for the bees, able to cause epidemics which often destroy all the colony contaminating also the adjacent hives).

At present, the already known hives are made of porous materials as wood, plastic material, plywood. These porous materials involve some drawbacks due to the frequent infections to which the bees are subjected from parasites as varoa, viruses, bacteria and bacilli.

These infections cause epidemics which decimate the colony and make necessary the destruction of the same in order to avoid contamination of the other hives. Because the parasites occupy the pores of the material constituting the hive, not only the colony has to be destroyed, but also the hive has to be burned, as prescribed by the specific law.

In particular, it is a general opinion that the varoa infection is spread by the drones which pass from one hive to the other entering inside the central bodies.

A further drawback, due to the vulnerability of the conventional hives, is that it is impossible to recover the bees part of the swarm which leaves the hives after that a new queen bee is born and follow the old queen bee to form a new nest. In fact, this operation is at present very difficult because it is necessary to find out and then collect the migrating swarms.

### Object of the invention

The main object of the present invention is to overcome the drawbacks of conventional hives and to provide a hive which is reusable also after a possible infection caused by pathogenic agents.

A further object is to provide an hive which allows the user to select and recover the migrating swarms without prejudice to the health of the colony.

A further object is to provide a easy-to-use and low-cost hive, which does not require maintenance and which can be easily disinfected.

### Summary of the invention

Said object have been reached according to the invention by an hive which after a parasite infection can be easily disinfected by heat or chemical agents and which can be used again.

The hive consists of a frame, preferably of stamped metal plate, which can resist the temperatures needed to disinfect the hive, and of disposable walls made of low-cost and light material removable panels which can be applied to the frame .

These disposable walls are preferably made of thermal insulating material such as polystyrene or PVC or other materials and composites.

According to a further characteristic of the invention, the access of the bee into the hive is controlled by an external removable cage which protrudes from the hive and forms an expansion region thereof. The space between the bars of this cage are such that only the worker bees are allowed to pass through, while the queen bee and the drones are prevented from passing.

A first advantage consists in that the hive can be disinfected and used again after a parasite infection of the bee colony housed in the hive has occurred.

A second advantage is that the present hive is more practical and less expensive than the conventional wood-made hives. That in virtue of the simple manufacturing of the metal frame, which can be obtained by welding of stamped thin plates, and of the low cost walls which can be made, for example, of polystyrene.

A further advantage is that the metal cage does not allow the drones to enter inside the central body of the hives, so avoiding any risks of infection due to varoa or to other noxious agents carried by the drones.

A still further advantage is that said cage gives the possibility of recovering the new swarms that, after the birth of a new queen bee, tend to migrate from the hive and to gather in the extended area constituted by the cage. The same cage allows the beekeeper to make an accurate selection of the swarms for relocation in a new hive or destruction in case of infection.

A still further advantage is that the present hive is very light (approximately 8 Kg over 18 Kg of the average conventional hive) and that the metal frame has a long life time.

A still further advantage is that the polystyrene or the PVC used to make said disposable walls are a better insulating material than wood and avoid the forming of water condensation.

### List of drawings

These and further advantages will be better described with reference to the accompanying drawings, given as a non limiting example, in which:

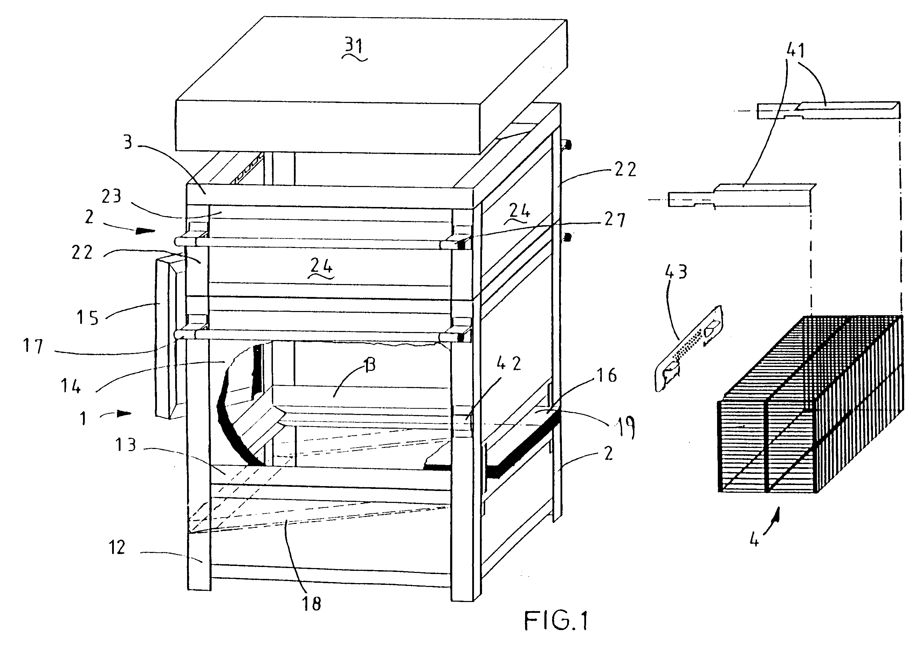

- fig.1 schematically shows an hive according to the invention and an exploded view of the cage and of its fixing means to the hive.

### Detailed description of the invention

With reference to the attached drawings, a preferred embodiment of the hive according to the invention comprises a body 1 consisting of corner vertical rods 12 and horizontal crossbars 13. The cross bars are connected at various heights to the vertical rods in order to form a square-shaped frame. The lateral walls of body 1 consist of removable panels 14 and its bottom, called anti-varoa bottom, consists of a removable panel 16 which can be extracted from a frame 18. Frame 18 is pivoted on one side so that it can rotate downwardly to reach the position indicated with dotted lines in fig.1. This solution has the advantage that it allows the anti-varoa bottom to be easily examined to find out information relating to the possible presence of parasites inside the hive.

One of the lateral panels 14 is fixed to a lateral window 15 in order to permit the inspection of the hive.

At the entrance of the hive, on the front wall of the body 1, a grid 43 can be placed. Grid 43 has a mesh of suitable size in order to selectively control the access of the bees into the hive and is fixed to the body by conventional means.

An honey box 2 is placed on the body 1 and has the same plant dimension of the latter. Also box 2 consists of vertical rods 22, crossbars 23 and removable panels 24. An honey-box cover 3 is placed on box 2 and is provided with a lid 31 which can be lifted from cover 3. Lid 31 is preferably formed by disposable insulating panels.

Couples of handle 17, 27 can be provided for in order to make easier the handling and the transport of body 1 and box 2.

According to a characteristic of the invention a cage 4 is attached to body 1. Cage 4 closes the entrance 19 of the hive and is fixed to body 1 by connecting rods 41 which are inserted in corresponding guides 42 of the body, along which they can slide to be removed. The space between the bars of the cage being bigger than the dimensions of the worker bees and smaller then the dimensions of the queen bee and of the drones.

The external cage can also be formed by lateral walls made of insulating panels and a frontal wall made of equally spaced bars. The frontal wall can be inclined constituting a recess wall in respect of the lateral walls.

Advantageously, the insulating lateral walls and the recess frontal wall avoid any risk of overheating of the cage.

In a preferred embodiment of the invention, all the parts of the frame are made of metal. For example, body 1, box 2 and box cover 3 are made by welding of stamped thin plates. However, the use of different materials, able to resist to a temperature higher than 130°C, as required by the sterilising process, is not excluded.

Analogously, sterilisation can be obtained by chemical agents. In this case the material used (which can be both a metal and a non metal material) has to be resistant to the substances chosen to disinfect the hive. Furthermore, the material used to make the frame of the hive has to be a non-porous material so that the chemical agents do not remain inside its pores after the disinfection has been completed.

According to the invention, as a consequence of a possible infection of the hive it is sufficient to remove the panels (which are made of polystyrene or of another low-cost material) and then to thermally or chemically treat the other parts of the hive.

According to the invention also relatively small boxes can be made which have smaller dimensions and a simplified structure in respect of the hive. These boxes are used to collect and transport the already cited migrating swarms and provides the same advantages of a more complex hive when it is necessary to destroy it.

In a further embodiment all or a part of the panels can be made of glass in order to increase the luminosity of the hive and thus the efficiency of the bee nest.

The present invention has been described with reference to a preferred embodiment. Nevertheless, equivalent modifications of the shape, dimensions and arrangement of the various parts of the hive can be provided without going beyond the scope of the invention.

## Claims

1. Contamination-immune hive, characterised in that it consists of a fixed structure resistant to thermal and/or chemical disinfecting treatment and of removable and disposable walls.

2. Hive according to claim 1, characterised in that said fix structure consists of a metal frame comprising: a body (1) constituted by vertical rods (12) and cross bars (13); a honey box (2) which is placed on the top of said body (1) and it is constituted by vertical rods (22) and cross bars (23); an honey box cover (3) which can be placed on the top of the box (2) and it is covered by an opening lid (31).

3. Hive according to claim 1, characterised in that said walls are made of heat insulating material as polystyrene or PVC.

4. Hive according to the preceding claims, characterised in that said disposable walls consist of panels (14,24) which are fixed to the body (1) and to the honey box (2), the bottom of the box (1) consisting of a panel (16) which is mounted on a pivoted frame (18).

5. Hive according to the preceding claims, characterised in that one of the lateral panels (14) of body (1) is fixed to a lateral window (15) intended to allow the hive to be inspected.

6. Hive according to the preceding claims, characterised in that the frontal wall of said body (1) is provided with a cage (4) surrounding the entrance (19), the space between the bars of the cage being bigger than the dimensions of the worker bees and smaller then the dimensions of the queen bee and of the drones.

7. Hive according to the preceding claims, characterised in that said external cage (4) communicates with the hive body in order to provide an expansion region intended to the recovering of the migrating swarms.

8. Hive according to the preceding claims, characterised in that said external cage is formed by lateral walls made of insulating panels and a frontal wall made of equally spaced bars, the frontal wall constituting a recess portion in respect of the lateral walls.

9. Hive according to the preceding claims, characterised in that said cage (4) is fixed to the body (1) and can be removed by rods (41) inserted into corresponding guides (42) of the body (1).

10. Hive according to the preceding claims, characterised in that said frame is made of welded metal plates.

11. Hive according to the preceding claims, characterised in that said frame is made of a material resistant to temperatures higher than 130°C, preferably than 180°C.
